# EUROPÄISCHE PATENTSCHRIFT

(11) **EP 1 916 928 B1**
(45) Veröffentlichungstag und Bekanntmachung des Hinweises auf die Patenterteilung: **23.01.2019**
(21) Anmeldenummer: 06778117.9
(22) Anmeldetag: 02.08.2006
(51) Int. Cl.: A47J 27/04

(54) **DAMPFGARGERÄT**
STEAM COOKING APPLIANCE
DISPOSITIF DE CUISSON À LA VAPEUR

(30) Priorität: 16.08.2005 EP 05017743
(43) Veröffentlichungstag der Anmeldung: 07.05.2008
(73) Patentinhaber: BSH Hausgeräte GmbH, 81739 München (DE)
(72) Erfinder: KLEINBUB, Guido, 76477 Elchesheim/Illingen (DE); LEGO, Dieter, 76137 Karlsruhe (DE)
(86) Internationale Anmeldenummer: PCT/EP2006/064932
(87) Internationale Veröffentlichungsnummer: WO 2007/020188

(56) Entgegenhaltungen:
- EP-A1- 0 673 615
- FR-A- 2 398 433
- FR-A1- 2 614 976
- US-A- 2 253 154
- US-A- 5 901 642

## Beschreibung

Die Erfindung betrifft ein Dampfgargerät zum Garen von Lebensmitteln mittels Dampf mit einem Garraum, mit einem Wasserbehälter zur Speicherung von Wasser, mit einer Heizeinrichtung zum Verdampfen von Wasser und mit einer Verbindungsleitung zwischen dem Wasserbehälter und dem Garraum, über die das Wasser ausschließlich der Schwerkraft folgend in den Garraum gelangt.

Ein derartiges Gerät zum drucklosen Garen von Lebensmitteln ist aus der EP 0 673 615 B1 bekannt. Es umfasst im Inneren des Gargefäßes eine durch eine Heizeinrichtung beheizbare Platte. Außerdem weist sie eine Vorrichtung zum Zuführen von Wasser auf, die ein gerades Rohr umfasst, das wenigstens teilweise im Inneren des Gargerätes angeordnet ist, um Wasser aus einem Vorratsbehälter auf die erhitzte Platte tropfen zu lassen. An dieser Vorrichtung erweist es sich als nachteilig, dass das Rohr im Garraum im Bereich über der Platte schnell verkalkt. Außerdem müssen Vorrichtungen zur Regelung des Wasserzuflusses vorgesehen sein, die den technischen Aufwand des Gerätes erhöhen und die Herstellung des Gerätes verteuern.

Die US 2,253,154 offenbart einen Dampfgenerator, insbesondere eine Dampfgarvorrichtung.

Die US 5,901,642 offenbart einen brennstoffsparenden Schubladendampfschrank.

Die FR 2 614 976 A1 offenbart einen elektrischen Ofen zum Garen von Lebensmitteln umfassend einen Dampfgenerator.

Die FR 2 398 433 A7 offenbart eine Dampfvorrichtung in Kombination mit einem Grill.

Aufgabe der Erfindung ist es daher, ein Dampfgargerät anzugeben, das bei gleicher Zuverlässigkeit kostengünstiger herstellbar ist.

Diese Aufgabe wird erfindungsgemäß durch ein Dampfgargerät der eingangs genannten Art gelöst, bei dem der Wasserbehälter ausschließlich über die Verbindungsleitung mit der Atmosphäre verbunden ist. Die Erfindung verfolgt also das Prinzip, einen atmosphärischen Druckausgleich innerhalb des Wasserbehälters nur über die Verbindungsleitung zu ermöglichen. Die Verbindungsleitung muss demzufolge im Betrieb einerseits Wasser aus dem Wasserbehälter in den Garraum transportieren, und andererseits gleichzeitig einen Luftzutritt ermöglichen, der das Volumen des aus dem Wasserbehälter abgegebenen Wassers ersetzt. Der Leitungsquerschnitt der Verbindungsleitung ist dabei so zu wählen, dass das Wasser trotz seiner Oberflächenspannung und des gleichzeitigen Luftzutritts und Lufteinströmens in der dem Wasser entgegengesetzten Strömungsrichtung möglich ist. Die Menge des Wasserzutritts in den Garraum kann also durch die Wahl des Leitungsquerschnitts der Verbindungsleitung eingestellt werden. Damit erübrigen sich aufwändige Steuer- und Regeleinrichtungen, womit die Herstellung des Gargeräts kostengünstiger, seine Bedienung einfacher und sein Betrieb weniger anfällig ist.

Das Wesen des Dampfgargerätes ist es, dass innerhalb des Garraumes eine erhebliche Menge an Wasserdampf erzeugt wird. Dies kann auch wie im zitierten Stand der Technik durch Betropfen einer heißen Platte geschehen. Die Verbindungsleitung mündet innerhalb des Garraumes in ein Verdampfungsbecken, in dem sich durch Wasserzutritt über die Verbindungsleitung ein Wasserspiegel einstellt. Unterhalb des Verdampfungsbeckens ist eine Heizeinrichtung angeordnet, über die das Wasser im Verdampfungsbecken erhitzt und verdampft werden kann. Diese Anordnung hat den entscheidenden Vorteil, dass die Verkalkungsfront nun auf der großen und leicht zugänglichen Fläche des Verdampfungsbeckens auftritt. Über eine Beschickungsöffnung, über die das Dampfgargerät mit zu garenden Lebensmitteln bestückt werden kann, kann das Verdampfungsbecken auch bequem gereinigt werden.

Die Dosierung derjenigen Wassermenge, die dem Verdampfungsbecken zugeleitet wird, lässt sich einerseits, wie oben beschrieben, durch den Durchmesser der Verbindungsleitung oder andererseits durch Ventile oder sonstige Durchflussregeleinrichtungen einstellen, wie sie aus dem Stand der Technik bekannt sind. Die Erfindung dagegen verwirklicht ein Prinzip, nach dem sich der Wasserstand im Verdampfungsbecken in einem Bereich des Maximalwasserspiegels innerhalb des Verdampfungsbeckens selbst reguliert. Denn nach der Erfindung mündet die Verbindungsleitung mit einer Mündungsöffnung an einen Rand des Verdampfungsbeckens, wobei die Oberkante der Mündungsöffnung in einer Höhenposition im Bereich eines gewünschten Höchstpegels des Verdampfungsbeckens angeordnet ist. Der Höchstpegel stellt den Wasserstand innerhalb des Verdampfungsbeckens bei optimalem Füllungsgrad dar. Solange der Wasserspiegel innerhalb des Verdampfungsbeckens unterhalb der Oberkante der Mündungsöffnung liegt, kann Luft zum Volumen- bzw. Druckausgleich des in das Verdampfungsbecken geflossenen Wassers in den Wasserbehälter zurückströmen. Sobald jedoch der Wasserspiegel den Höchstpegel und damit die Oberkante der Mündungsöffnung erreicht hat, sperrt er einen weiteren Luftzutritt ab. Dadurch kommt der Wasserfluss aus dem Wasserbehälter in Richtung des Verdampfungsbeckens zum Erliegen. Dies ist einerseits gewünscht, weil mit Erreichen des Höchstpegels der optimale Füllungsgrad des Verdampfungsbeckens erreicht ist, und andererseits erforderlich, um das Verdampfungsbecken gegen ein Überlaufen zu schützen. Im Betrieb des Gargerätes sinkt der Wasserspiegel im Verdampfungsbecken durch Verdunstung und Dampfbildung bestimmungsgemäß soweit, bis der Wasserspiegel auf eine Höhe unterhalb der Oberkante der Mündungsöffnung absinkt. Dadurch kann wieder Luft in den Wasserbehälter einströmen, damit Wasser aus dem Wasserbehälter abfließen kann. Daraufhin füllt sich das Verdampfungsbecken, bis der Wasserspiegel wieder die Oberkante der Mündungsöffnung erreicht hat und einen weiteren Zufluss unterbindet. Die Erfindung verwirklicht also eine selbstständige Niveauregulierung des Wassers in dem Verdampfungsbecken ohne zusätzliche elektrische oder mechanische Regelelemente. Durch den Wegfall eines Magnetventils oder einer Pumpe zur Niveauregulierung, deren Ansteuerung, Sensorik und Verkabelung und einer gegebenenfalls erforderlichen Ansteuersoftware kann eine erhebliche Kosteneinsparung erzielt werden. Mit dem Wegfall dieser Einrichtungen verringert sich auch die Anfälligkeit des Dampfgargeräts gegen technische Störungen, wodurch ohne hohen Kostenaufwand eine hohe Funktionalität des Gerätes sichergestellt werden kann.

Wie oben bereits dargestellt, kann mittels des Durchmessers der Verbindungsleitung der Wasserzufluss eingestellt werden. Der erforderliche Leitungsquerschnitt kann grundsätzlich vom Fachmann berechnet oder empirisch bestimmt werden. Umfangreiche Messreihen haben ergeben, dass der Mindestdurchmesser der Verbindungsleitung etwa 6 mm beträgt. Ab diesem Querschnitt ist ein zügiges Nachfließen von Wasser in das Verdampfungsbecken sichergestellt, ohne dass die Oberflächenspannung des Wassers einen gleichzeitigen Druckausgleich durch das Einströmen von Luft in den Wasserbehälter behindert.

Gemäß der Erfindung ist der Wasserbehälter in dem Gehäuse des Gargerätes integriert. Dieser Aufbau ermöglicht eine lagegenaue Führung des Wasserbehälters, die insbesondere beim Ankoppeln des Wasserbehälters an die Verbindungsleitung wichtig ist. Insgesamt ergibt sich dadurch auch ein kompakterer Geräteaufbau und ein handlicheres Dampfgargerät. (Durchmesser der Verbindungsleitung von 6 mm ergänzen)

Durch den Wasserverbrauch zur Dampferzeugung muss das Wasser im Wasserbehälter gelegentlich nachgefüllt werden, wozu der Wasserbehälter aus dem Gerätgehäuse entnehmbar ist. Als Nachfüllöffnung kann prinzipiell eine bereits vorhandene Öffnung genutzt werden, über die der Wasserbehälter mit der Verbindungsleitung gekoppelt ist. Nach einer vorteilhaften Ausgestaltung der Erfindung kann jedoch eine separate, atmosphärisch abdichtbare Nachfüllöffnung, vorzugsweise an einer Oberseite des Wasserbehälters, angeordnet sein. Diese Nachfüllöffnung kann hinsichtlich Lage und Größe allein hinsichtlich einer möglichst bequemen Handhabung des Wasserbehälters beim Nachfüllen gestaltet werden. So kann es vorteilhaft sein, die Nachfüllöffnung in der Nähe eines Griffes am Wasserbehälter anzuordnen, womit ein Handhaben des Wasserbehälters beim Nachfüllen erleichtert werden kann. Der Durchmesser der Nachfüllöffnung sollte so groß gewählt werden, dass zum Beispiel ein Wasserstrahl aus einem Haushaltswasserhahn bequem hindurchgeleitet werden kann.

Nach einer weiteren vorteilhaften Ausgestaltung, welche die Bedienung des Gargerätes beim Nachfüllen von Wasser erleichtert, ist im Wasserbehälter an der Kupplungseinrichtung zur Verbindungsleitung ein Rückschlagventil angeordnet. Bei der Entnahme des Wassertanks aus dem Gerätegehäuse und der damit verbundenen Entkopplung des Wasserbehälters von der Verbindungsleitung schließt das Rückschlagventil, so dass eventuell vorhandenes Restwasser im Wasserbehälter nicht ausfließen kann.

Nach einer weiteren vorteilhaften Ausgestaltung der Erfindung ist in der Verbindungsleitung stromab des Rückschlagventils ein Absperrventil zur Absperrung der Verbindungsleitung angeordnet. Das Absperrventil kann vorzugsweise von der Frontseite des Dampfgargerätes und dort von einer Bedienungseinrichtung aus aktiviert werden. Es verhindert das Nachfließen von Wasser, wenn das Verdampfungsbecken zum Beispiel zu Reinigungszwecken geleert wird. Damit erübrigt sich die Entnahme des Wassertanks, wenn das Verdampfungsbecken zum Beispiel entkalkt werden soll.

Das Prinzip der Erfindung wird im Folgenden anhand von Figuren beispielshalber noch näher erläutert. Es zeigen:
- Figur 1: ein Dampfgargerät in einer perspektivischen Ansicht und
- Figur 2: eine schematische Darstellung der wasserführenden Einrichtungen.

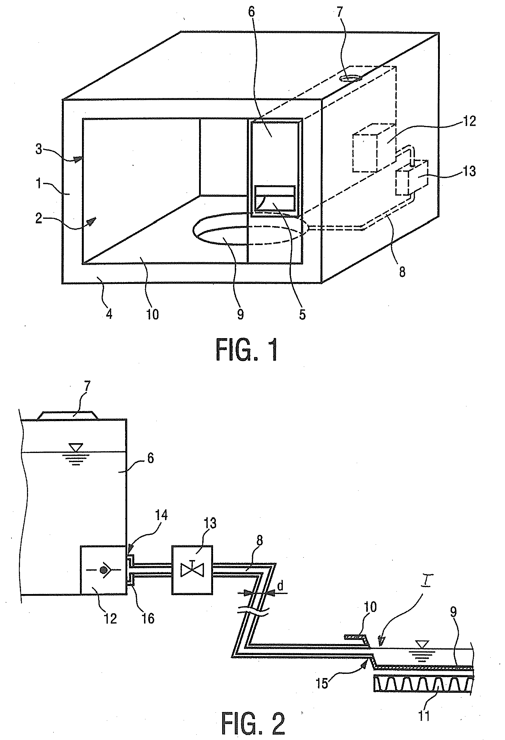

In einem Gerätegehäuse 1 eines Dampfgargerätes ist ein Garraum 2 angeordnet, der über eine Öffnung 3 bedienbar ist. Die Öffnung 3 des Garraumes 2 ist im Allgemeinen mit einer Tür verschlossen, die in Figur 1 weggelassen ist. Neben der Öffnung 3 befindet sich auf der Frontseite 4 des Gargerätes eine Griffeinrichtung 5 an einem Wasserbehälters 6. Er kann mittels des Griffes 5 aus dem Gerätegehäuse 1 herausgezogen werden, um nach Abnehmen eines Deckels 7 mit Wasser befüllt zu werden. Im eingeschobenen Zustand Wasser kann aus dem Wasserbehälter 6 über eine Verbindungsleitung 8 in eine Verdampfungsbecken 9 gelangen. Sie ist auf einer Bodenfläche 10 im Garraum 2 angeordnet ist. Unter der Verdampfungsbecken 9 ist ein in Figur 1 nicht dargestellter Heizkörper 11 angeordnet, über den das Wasser in der Verdampfungsbecken 9 erhitzt und verdampft werden kann. Am Auslauf des Wasserbehälters 6 ist ein Rückschlagventil 12 und in der Leitung 8 zwischen dem Wasserbehälter 6 und der Verdampfungsbecken 9 ein Absperrventil 13 angeordnet.

Figur 2 zeigt in einer schematischen Darstellung nur diejenigen Geräteteile des Dampfgargerätes 1, die mit der Funktionsweise der Verdampfungsbecken 9 in Zusammenhang stehen. Dies sind der Wasserbehälter 6 mit dem Rückschlagventil 12, die Verbindungsleitung 8 mit dem darin angeordneten Absperrventil 13 und die Verdampfungsbecken 9, die im Boden 10 des Gerätegehäuses 1 (nicht dargestellt) eingelassen ist und unter der sich die Heizeinrichtung 11 befindet. Die Verbindungsleitung 8 weist ein oberes Ende 14 und ein unteres Ende 15 auf. Das obere Ende 14 ist über eine Kupplungseinrichtung 16 mit dem Wasserbehälter 6 dicht verbunden. Sie wirkt mit dem Rückschlagventil 12 derart zusammen, dass es bei Entfernen des Wasserbehälters 6 aus seiner Betriebsstellung zum Nachfüllen das Rückschlagventil 12 geschlossen wird, damit kein Restwasser ausfließen kann. Das untere Ende 15 stellt die

Mündungsöffnung dar, mit der die Verbindungsleitung 8 in die Verdampfungsbecken 9 mündet. Die beiden Enden 14, 15 der Verbindungsleitung 8 sind relativ zueinander derart angeordnet, dass das Ende 14 in einer Höhenlage oberhalb des Endes 15 angeordnet ist.

Der Wasserbehälter 6 ist im Übrigen atmosphärisch dicht geschlossen. Zum Nachfüllen von Wasser kann er über den Deckel 7 geöffnet werden. Aus dem Wasserbehälter 6 kann also nur Wasser entweichen, wenn zugleich Luft als Druck- und Volumenausgleich in den Wasserbehälter 6 einströmen kann. Die einzige Öffnung, über die ein derartiger Austausch stattfinden kann, enthält die Kupplungseinrichtung 16. Das Wasser aus dem Wasserbehälter 6 fließt über die Verbindungsleitung 8 in das Verdampfungsbecken 9. Auf demselben Wege, aber in umgekehrter Richtung, muss gleichzeitig Luft über das untere Ende 16 durch die Verbindungsleitung 8 und die Kupplungseinrichtung 16 in den Wasserbehälter 6 einströmen. Dies ist solange möglich, wie der Wasserspiegel in der Verdampfungsschale 9 noch nicht so hoch gestiegen ist, dass er das untere Ende 15 vollständig abdeckt. Dessen Lage am Rand des Verdampferbeckens 9 ist so gewählt, dass das untere Ende 15 bei einem gewünschten Höchstwasserpegel im Verdampfungsbecken 9 vollständig überdeckt ist. In diesem Zustand kann keine Luft mehr durch das untere Ende 15 in den Wasserbehälter 6 eindringen. Weil der Wasserbehälter 6 im Übrigen dicht ist, also auch von woanders her keine Luft nachströmen kann, ist damit das Nachfließen von Wasser aus dem Wasserbehälter 6 in das Verdampfungsbecken 9 unterbunden. Ohne jegliche aufwändige Regeleinrichtung oder Pumpe ist damit dafür gesorgt, dass jederzeit der gewünschte Wasserspiegel im Verdampfungsbecken 9 vorliegt. Um die Passage des Wassers durch die Verbindungsleitung 8 trotz dessen Oberflächenspannung und die gleichzeitige Passage von Luft in der Gegenrichtung zu ermöglichen, weist die Verbindungsleitung 8 einen Mindestdurchmesser d von mehr als etwa 6 mm auf.

Insbesondere zu Reinigungszwecken kann es wünschenswert sein, dass das Verdampfungsbecken 9 entleert wird. Um ein Nachströmen von Wasser aus dem Wasserbehälter 6 zu unterbinden, ist das Absperrventil 13 dem Wasserbehälter 6 nachgeschaltet. Mit seiner Hilfe kann der im Betrieb des Gargerätes gewünschte selbsttätige Nachfluss von Wasser aus dem Wassertank 6 in das Verdampfungsbecken 9 unterbrochen werden, insbesondere wenn Kalkablagerungen im Verdampfungsbecken beseitigt werden sollen.

Da es sich bei dem vorhergehenden, detailliert beschriebenen Dampfgargerät um ein Ausführungsbeispiel handelt, kann es in der üblichen Weise vom Fachmann in weitem Umfang modifiziert werden, ohne den Bereich der Erfindung zu verlassen. Weiterhin schließt die Verwendung der unbestimmten Artikel "ein" bzw. "eine" nicht aus, dass die betreffenden Merkmale auch mehrmals vorhanden sein können.

### Bezugszeichenliste

- 1.: Gerätegehäuse
- 2.: Garraum
- 3.: Öffnung
- 4.: Frontseite
- 5.: Griff
- 6.: Wasserbehälter
- 7.: Deckel
- 8.: Verbindungsleitung
- 9.: Verdampfungsbecken
- 10.: Bodenfläche
- 11.: Heizeinrichtung
- 12.: Rückschlagventil
- 13.: Absperrventil
- 14.: oberes Ende
- 15.: unteres Ende
- 16.: Kupplungseinrichtung
- d: Durchmesser der Verbindungsleitung 8

## Patentansprüche

1. Dampfgargerät zum Garen von Lebensmitteln mittels Dampf mit einem Garraum (2), mit einem Wasserbehälter (6) zur Speicherung von Wasser, mit einer Heizeinrichtung (11) zum Verdampfen von Wasser und einer Verbindungsleitung (8) zwischen dem Wasserbehälter (6) und dem Garraum (2), über die das Wasser der Schwerkraft folgend in den Garraum (2) gelangt, wobei der Wasserbehälter (6) im Betrieb ausschließlich über die Verbindungsleitung (8) mit der Atmosphäre verbunden ist, wobei die Verbindungsleitung (8) innerhalb des Garraums (2) in ein Verdampfungsbecken (9) mündet, wobei die Verbindungsleitung (8) mit einer Mündungsöffnung (15) an einem Rand des Verdampfungsbeckens (9) endet, deren Oberkante in einer Höhenposition (I) im Bereich eines gewünschten Höchstpegels des Verdampfungsbeckens (9) angeordnet ist, und wobei die Verbindungsleitung (8) eine Eingangsöffnung (14) am Wasserbehälter (6) aufweist, die in einer Höhenposition oberhalb der Mündungsöffnung (15) angeordnet ist, **dadurch gekennzeichnet, dass** der Wasserbehälter (6) in einem Gehäuse (1) des Gargerätes integriert ist, wobei die Verbindungsleitung (8) einen Mindestdurchmesser (d) von etwa 6 mm aufweist, wobei die Verbindungsleitung (8) auf einer Bodenfläche (10) im Garraum (2) angeordnet ist, wobei unter dem Verdampfungsbecken (9) die Heizeinrichtung (11) angeordnet ist und wobei sich die Heizeinrichtung (11) unter der Verbindungsleitung (8) befindet.

2. Dampfgargerät nach Anspruch 1, **dadurch gekennzeichnet, dass** der Wasserbehälter (6) eine atmosphärisch abdichtbare Nachfüllöffnung (7) aufweist.

3. Dampfgargerät nach einem der obigen Ansprüche, **dadurch gekennzeichnet, dass** am Auslauf des Wasserbehälters (6) ein Rückschlagventil (12) angeordnet ist.

4. Dampfgargerät nach einem der obigen Ansprüche, **dadurch gekennzeichnet, dass** in der Verbindungsleitung (8) ein Sperrventil (13) zur Absperrung der Verbindungsleitung (8) angeordnet ist.

## Claims

1. Steam cooking appliance for cooking foodstuffs by means of steam with a cooking chamber (2), with a water container (6) for storing water, with a heating facility (11) for evaporating water and a connection line (8) between the water container (6) and the cooking chamber (2), via which the water reaches the cooking chamber (2) according to the force of gravity, wherein during operation the water container (6) is exclusively connected to the atmosphere via the connection line (8), wherein the connection line (8) opens into an evaporation basin (9) within the cooking chamber (2), wherein the connection line (8) with an opening mouth (15) ends at an edge of the evaporation basin (9), the upper edge of which is arranged at a vertical position (I) in the region of a desired maximum level of the evaporation basis (9), and wherein the connection line (8) has an inlet opening (14) at the water container (6) which is arranged at a height position above the outlet opening (15), **characterised in that** the water container (6) is integrated in a housing (1) of the cooking appliance, wherein the connection line (8) has a minimum diameter (d) of approx. 6 mm, wherein the connection line (8) is arranged on a base surface (10) in the cooking chamber (2), wherein the heating facility (11) is arranged below the evaporation basin (9) and wherein the heating facility (11) is located below the connection line (8).

2. Steam cooking appliance according to claim 1, **characterised in that** the water container (6) has an atmospherically sealable refill opening (7).

3. Steam cooking appliance according to one of the above claims, **characterised in that** a non-return valve (12) is arranged at the outlet of the water container (6).

4. Steam cooking appliance according to one of the above claims, **characterised in that** a shut-off valve (13) for shutting off the connection line (8) is arranged in the connection line (8).

## Revendications

1. Appareil de cuisson à la vapeur pour cuire des aliments à la vapeur dans un espace de cuisson (2), avec un réservoir d'eau (6) pour le stockage d'eau, avec un dispositif de chauffe (11) pour évaporer l'eau et une conduite de raccordement (8) entre le réservoir d'eau (6) et l'espace de cuisson (2), via laquelle accède à l'espace de cuisson (2) par gravité, dans lequel le réservoir d'eau (6) est, durant le fonctionnement, exclusivement relié à l'atmosphère via la conduite de raccordement (8), dans lequel la conduite de raccordement (8) débouche à l'intérieur de l'espace de cuisson (2) dans un bassin d'évaporation (9), dans lequel la conduite de raccordement (8) se termine par un orifice d'embouchure (15) sur un bord du bassin d'évaporation (9), dont le bord supérieur est disposé dans une position en hauteur (I) dans la zone d'un niveau maximal souhaité du bassin d'évaporation (9), et dans lequel la conduite de raccordement (8) présente un orifice d'entrée (14) sur le réservoir d'eau (6), lequel orifice est disposé dans une position en hauteur supérieure à l'orifice d'embouchure (15), **caractérisé en ce que** le réservoir d'eau (6) est intégré à une carcasse (1) de l'appareil de cuisson, dans lequel la conduite de raccordement (8) présente un diamètre minimal (d) d'environ 6 mm, dans lequel la conduite de raccordement est disposée sur une surface de sol (10) dans l'espace de cuisson (2), dans lequel le dispositif de chauffage (11) est disposé sous le bassin d'évaporation (9) et dans lequel le dispositif de chauffage (11) se trouve sous la conduite de raccordement (8).

2. Appareil de cuisson à la vapeur selon la revendication 1, **caractérisé en ce que** le réservoir d'eau (6) présente un orifice de remplissage (7) pouvant être rendu étanche par la pression atmosphérique.

3. Appareil de cuisson à la vapeur selon l'une des revendications précédentes, **caractérisé en ce qu'**une soupape de retenue (12) est disposée à la sortie du réservoir d'eau (6).

4. Appareil de cuisson à la vapeur selon l'une des revendications précédentes, **caractérisé en ce qu'**une soupape d'arrêt (13) pour couper la conduite de raccordement (8) est disposée dans la conduite de raccordement (8).
